# EUROPÄISCHE PATENTSCHRIFT

(11) **EP 0 895 848 B1**
(45) Veröffentlichungstag und Bekanntmachung des Hinweises auf die Patenterteilung: **29.01.2003**
(21) Anmeldenummer: 98109832.0
(22) Anmeldetag: 29.05.1998
(51) Int. Cl.: B29C 45/16

(54) **Vorrichtung zur Herstellung von Spritzgiessartikeln aus mindestens zwei Kunststoffschmelzen**
Device for producing injection moulded articles from at least two plastic melts
Dispositif de fabrication d'articles moulés par injection d'au moins deux matières plastiques fondues

(30) Priorität: 04.08.1997 DE 19733667
(43) Veröffentlichungstag der Anmeldung: 10.02.1999
(73) Patentinhaber: Ferromatik Milacron Maschinenbau GmbH, D-79364 Malterdingen (DE)
(72) Erfinder: Nesch, Wolfgang, 77930 Lahr-Sulz (DE)
(74) Vertreter: Röther, Peter, Dipl.-Phys.

(56) Entgegenhaltungen:
- DE-A- 2 426 883
- FR-A- 2 372 019
- GB-A- 2 300 142
- US-A- 4 726 558
- PATENT ABSTRACTS OF JAPAN vol. 11, no. 250 (M-616), 14. August 1987 & JP 62 060618 A (JAPAN STEEL WORKS LTD:THE), 17. März 1987
- "MULTIFUNCTIONAL MOLDING" JAPAN PLASTICS AGE, Bd. 25, Nr. 215, Mai 1987 - Juni 1987, Seiten 21-23, XP002084459 TOKYO, JP
- PATENT ABSTRACTS OF JAPAN vol. 5, no. 101 (M-76), 30. Juni 1981 & JP 56 044635 A (NIPPON SEIKOSHO K.K.), 23. April 1981

## Beschreibung

Die Erfindung betrifft eine Vorrichtung zur Herstellung von Spritzgießartikeln aus mindestens zwei Kunststoffschmelzen gemäß den Merkmalen des Oberbegriffs des Patentanspruchs 1.

Eine solche Vorrichtung ist aus der GB-A-2 300 142 bekannt. In DE 36 20 175 C2 Dort wird eine Spritzgießmaschine beschrieben, der die Aufgabe zugrunde lag, neben der Sicherstellung eines vorgegebenen Geschwindigkeitsprofils für das Schließen - und Öffnen - der Spritzgießform die Herstellung von Spritzgießartikeln aus mindestens zwei Kunststoffschmelzen, beispielsweise solchen mit unterschiedlichen Materialeigenschaften oder mit unterschiedlichen Farben oder solchen, die nach dem Erstarren durchsichtige und undurchsichtige Bereiche im Spritzgießartikel ergeben, innerhalb eines einzigen Maschinenzyklus zu gestatten.

Zu diesem Zweck weist die in Rede stehende Spritzgießmaschine außer der für derartige Maschinen üblichen Anordnung von einer ortsfest auf einem Maschinenrahmen installierten feststehenden Formaufspannplatte zur Aufnahme einer Formhälfte, einer in Abstand davon ebenfalls ortsfest auf dem Maschinenrahmen installierten Gegendruckplatte, die mit der feststehenden Formaufspannplatte außer über den Maschinenrahmen direkt mittels mehrerer - üblicherweise vier - stabiler geradliniger Holme kraftschlüssig verbunden ist, sowie einer auf den Holmen mittels einer zwischen der Gegendruckplatte und der verfahrbaren Formaufspannplatte angeordneten und wirksamen Schließeinheit bekannter Art, beispielsweise einer hydraulisch betätigten Kolben-Zylinder-Anordnung oder einem von einer hydraulischen Kolben-Zylinder-Anordnung betätigten Kniehebelmechanismus, verfahrbaren zweiten Formaufspannplatte zur Aufnahme einer zweiten Formhälfte noch einen zwischen den beiden Formaufspannplatten mit den von ihnen getragenen Formhälften angeordneten prismatischen Kernträgerkörper auf, der um eine von zwei weiteren, parallel zu den vorgenannten Holmen ausgerichteten und parallel zu diesen verfahrbaren Holmen senkrecht zu deren Längsachsen gehaltenen Drehachse verschwenkbar, auf seinen parallel zu seiner Drehachse ausgerichteten Seitenflächen mit weiteren Formhälften, die auch einfach als Kerne ausgebildet sein können, versehen und mittels der Verschwenkbewegungen so einstellbar ist, daß jeweils zwei seiner mit Formhälften bestückten Seitenflächen je einer der Formaufspannplatten exakt gegenüberstehen, so daß die von den Seitenflächen getragenen weiteren Formhälften mit der ihnen jeweils gegenüberstehenden Formhälfte an einer der Formaufspannplatten eine vollständige Spritzgießform ausbilden, wenn die Schließeinheit in Schließrichtung betätigt worden ist.

Die Beaufschlagung der so ausgebildeten Spritzgießformen mit je einer Kunststoffschmelze erfolgt dann mittels je einer Plastifizier- und Einspritzeinheit bekannter Art, wobei die zwischen feststehender Formaufspannplatte und Kernträgerkörper ausgebildete Spritzgießform üblicherweise von einer Plastifizier- und Einspritzeinheit mit Kunststoffschmelze beaufschlagt wird, die in Längsrichtung der Holme auf der der Spritzgießform abgekehrten Seite der feststehenden Formaufspannplatte angeordnet und durch eine Bohrung in dieser Formaufspannplatte an die Angußöffnung eines in der von der feststehenden Formaufspannplatte getragenen Formhälfte verlaufenden Angußkanals anlegbar ist, während die zwischen verfahrbarer Formaufspannplatte und Kernträgerkörper ausgebildete Spritzgießform über einen sowohl in der verfahrbaren Formaufspannplatte als auch in der von dieser getragenen Formhälfte verlaufenden Angußkanal, dessen Angußöffnung sich in einer der parallel zur Längsrichtung der Holme ausgerichteten Außenflächen der verfahrbaren Formaufspannplatte befindet, von einer zweiten Plastifizier- und Einspritzeinheit mit einer anderen Kunststoffschmelze beaufschlagt wird, wobei diese Plastifizier- und Einspritzeinheit im wesentlichen senkrecht zur Längsrichtung der Holme angeordnet ist und jeweils erst nach dem vollständigen Schließen der Spritzgießformen an die Angußöffnung in der verfahrbaren Formaufspannplatte herangefahren wird.

Sofern der prismatische Kernträgerkörper senkrecht zu seiner Drehachse eine Querschnittsfläche in Form eines regelmäßigen geradzahligen Vielecks hat und die Drehachse im wesentlichen vertikal ausgerichtet ist, können im geschlossenen Zustand der von den an den Formaufspannplatten und dem Kernträgerkörper angeschlagenen Formhälften gebildeten Spritzgießformen weitere angepaßt angeordnete Formaufspannplatten mit zugehörigen Formhälften und Plastifizier- und Einspritzeinheiten an die übrigen mit weiteren Formhälften bestückten Seitenflächen des Kernträgerkörpers herangefahren werden, um entweder zusätzliche Kunststoffschmelzen zur Herstellung des gewünschten Spritzgießartikels beizusteuern oder aber mehr als einen der gewünschten Spritzgießartikel innerhalb eines vollständigen Maschinenzyklus zu erzeugen. Der minimale Maschinenzyklus besteht dabei darin, daß in einer Spritzgießform - vorzugsweise in der, die mittels der an der feststehenden Formaufspannplatte angeschlagenen Formhälfte gebildet wird - mit einer ersten Plastifizier- und Einspritzeinheit ein verlorener Kern gespritzt wird, während gleichzeitig in einer zweiten - im Minimalfall vorzugsweise in der mittels der an der verfahrbaren Formaufspannplatte angeschlagenen Formhälfte gebildeten - Spritzgießform ein im vorherigen Zyklusschritt hergestellter verlorener Kern von einer zweiten Plastifizier- und Einspritzeinheit mit deren Kunststoffschmelze zu dem gewünschten Spritzgießartikel vervollständigt wird. Der fertiggestellte Spritzgießartikel wird dann nach Zweckmäßigkeitsgründen während des Zeitraums vom Öffnen der Spritzgießformen über das Verschwenken des Kernträgerkörpers um seine Drehachse - im betrachteten Minimalfall üblicherweise um einen Winkel von 180° - bis zur Plazierung der vom Kernträgerkörper gehaltenen Formhälften vor der jeweils anderen Formaufspannplatte von einem in oder an der verfahrbaren Formaufspannplatte oder im Kernträgerkörper angeordneten Auswerfer an vorgegebener Stelle ausgestoßen.

Die beiden obengenannten weiteren Holme, die parallel zu den die feststehende Formaufspannplatte und die Gegendruckplatte kraftschlüssig verbindenden Holmen angeordnet und verfahrbar sind und die die Drehachse des Kernträgerkörpers halten, werden von zwei Bohrungen in der verfahrbaren Formaufspannplatte getragen und geführt, sind auf der dem Kernträgerkörper abgekehrten Seite der verfahrbaren Formaufspannplatte üblicherweise an ihren dortigen Enden durch eine Quertraverse verbunden, die ihrerseits kraftschlüssig mit einem an der verfahrbaren Formaufspannplatte angeschlagenen Antrieb, beispielsweise einer hydraulisch betätigten Kolben-Zylinder-Anordnung oder einem entsprechend gesteuerten Schrittmotor, verbunden ist, und halten die Drehachse des Kernträgerkörpers üblicherweise mittels an ihren der feststehenden Formaufspannplatte zugewandten Enden angeordneten Lagern, wobei die Drehachse selbst sowohl im wesentlichen horizontal als auch im wesentlichen vertikal oder auch in einer Zwischenstellung gelagert werden kann, solange diese Lagerung senkrecht zur Achse der Holme erfolgt.

Die vorbeschriebene Konstruktion gestattet zwar sowohl eine eindeutige Verschwenkbewegung des Kernträgerkörpers, auch wenn in der in Rede stehenden Druckschrift keinerlei Aussagen über den erforderlichen Mechanismus getroffen werden, sofern der Abstand zwischen der Drehachse des Kernträgerkörpers und den Formaufspannplatten eine ausreichende Länge aufweist, als auch eine eindeutige Veränderung des relativen Abstandes zwischen Kernträgerkörper und verfahrbarer - und damit zwangsläufig auch der feststehenden - Formaufspannplatte, erlaubt aber bei der üblichen Dimensionierung von Holmen der in Rede stehenden Art nur die Verwendung eines leichten und damit kleinen Kernträgerkörpers und demzufolge auch nur kleiner Formhälften, die auch nur die Herstellung von Spritzgießartikeln kleiner Dimensionen zuläßt. Wie bekannt, werden heutzutage aber auch eine Vielzahl von großdimensionierten - insbesondere großflächigen - Teilen, beispielsweise Stoßdämpfer, Armaturenbretter, Dachhimmel u.a. für Kraftfahrzeuge, aus Kunststoffschmelzen gespritzt, können jedoch bei der Forderung nach einem Aufbau aus zwei oder mehr Kunststoffschmelzen nur in aufwendigen mehrstufigen Spritzgießverfahren hergestellt werden.

Die zur Herstellung solcher Spritzgießartkel nach dem vorbeschriebenen Stand der Technik erforderlichen Spritzgießformen bzw. Formhälften und der zu deren Halterung erforderliche Kernträgerkörper würden aufgrund ihrer erforderlichen Masse zur Ausbildung der großvolumigen und/oder großflächigen Formhälften eine sehr kostenaufwendige Konstruktion der den Kernträgerkörper tragenden und verfahrenden zusätzlichen Holme einschließlich deren Führung in der verfahrbaren Formaufspannplatte und des auf der dem Kernträgerkörper abgekehrten Seite der verfahrbaren Formaufspannplatte zu installierenden Antriebs sowie eine wesentlich stabilere Auslegung der verfahrbaren Formaufspannplatte selbst, der zugehörigen Schließeinheit und letztlich des gesamten Maschinenrahmens erfordern, um zu verhindern, daß sich die den Kernträgerkörper tragenden Holme zumindest bei jedem Öffnungsvorgang der Spritzgießformen verbiegen und/oder ihre Lager in der verfahrbaren Formaufspannplatte verformen, so daß schon nach kurzer Zeit kein paßgerechtes Schließen der Spritzgießformen mehr durchführbar ist.

Abgesehen davon wäre unter solchen Voraussetzungen auch ein Auswechseln des Kernträgerkörpers, das in der in Rede stehenden Druckschrift zwar nirgends erwähnt, für einen flexiblen Einsatz einer Spritzgießmaschine der vorliegenden Art jedoch zumindest sehr wünschenswert ist, stets mit einem erheblichen Risiko verbunden, da die plötzliche Entlastung der zusätzlichen Holme beim Entformen eines Kernträgerkörpers oder auch die plötzliche Belastung beim Einsetzen eines Kernträgerkörpers in jedem Fall zu mehr oder weniger gedämpften Schwingungen der Holme führen würde, die sehr schnell Materialermüdungen, Haarrisse, Spannungsrißkorrosionen und ähnliche Materialfehler mit der Folge einer plötzlichen Bruchgefahr der Holme, verbunden mit einer erheblichen Unfallgefahr für das Bedienungspersonal, nach sich zögen. Dabei wäre die Verwendbarkeit der in der DE 36 20 175 C2 offenbarten Spritzgießmaschine grundsätzlich auch für die Herstellung großvolumiger und/oder großflächiger Spritzgießartikel aus mindestens zwei Kunststoffschmelzen attraktiv.

In der GB 2 300 142 A ist eine zur DE 36 20 175 C2 artverwandte Spritzgießmaschine in zwei unterschiedlichen Ausführungsformen beschrieben, mit denen die Erzeugung großvolumiger und/oder großflächiger Spritzgießartikel durchführbar ist, die aber beide gegenüber dem Gegenstand der DE 36 20 175 C2 einerseits nur eine geringere Wahlmöglichkeit bezüglich der verwendbaren Zahl von gleichzeitig füllbaren Spritzgießformen - nämlich stets nur zwei - bieten und andererseits keinerlei Möglichkeit zum separaten Auswechseln eines kompletten Kernträgerkörpers nahelegen - also erst recht keine risikoärmere und sicherere Auswechslung dieser Art offenbaren.

Die erste Ausführungsform verwendet zwischen feststehender und verfahrbarer Formaufspannplatte einen ebenfalls in gleicher - horizontaler - Richtung verfahrbaren Kernträgerkörper oder auch Formhälftenträger, der als ein im Innenbereich eines stabilen, mittels schienengeführter Rollen auf dem Maschinenbett abgestützten einteiligen Rahmens, der in einer zur Fahrtrichtung des Formhälftenträgers senkrechten Ebene umläuft, um eine vertikale Drehachse um jeweils 180° verschwenkbarer Rotationskörper als Träger von zwei auf entgegengesetzten seiner Seitenflächen angeordneten Kernen oder Formhälften ausgebildet ist, dessen Verschwenkbewegungen von einem in den Rahmen integrierten Antrieb bewirkt werden. Soweit diese Ausführungsform Holme aufweist, dienen diese nur als Zug-, nicht aber als Tragelemente. Eine Kräfte aufnehmende Gegendruckplatte ist hier nicht vorhanden. Ein Auswechseln des vorgenannten Kernträgerkörpers oder Formhälftenträgers erfordert die vollständige Demontage und Reinstallation zumindest der gesamten Schließeinheit der vorliegenden Spritzgießmaschine.

Die zweite Ausführungsform unterscheidet sich von der ersten im wesentlichen - abgesehen von hier nicht relevanten Änderungen der Anordnung von Zug- und Klemmelementen der Schließeinheit der vorliegenden Spritzgießmaschine - dadurch, daß der Kernträgerkörper oder Formhälftenträger ein Rotationskörper ist, der nicht im Innenbereich eines einteiligen umlaufenden Rahmens, sondern zwischen einem oberen und einem unteren, je ein Achslager aufweisenden plattenartigen Halteelement mittels eines nur pauschal angegebenen Rotationsantriebes um jeweils 180° um eine vertikale Drehachse verschwenkbar ist. Dabei wird jedes Halteelement von je zwei Holmen geführt, die gleichzeitig als Zugelemente zur Erzeugung des Schließdrucks dienen und auf der der feststehenden Formaufspannplatte abgewandten Seite der Schließeinheit in einer auf dem Maschinenbett in Schließrichtung der Spritzgießmaschine verfahrbaren Endplatte münden, die jedoch nicht als Gegendruckplatte, sondern nur als Stabilisierung der Holmgeometrie dient. Die beiden Halteelemente werden von je einer hydraulischen Kolben-Zylinder-Anordnung in der Schließrichtung hin- und herbewegt, die in punktsymmetrischer Anordnung zur Symmetrieachse der Schließeinheit auf gegen-überliegenden Seiten von dieser an je einem der Halteelemente angreifen, so daß letztere stets nur gemeinsam mit dem Rotationskörper synchron verfahrbar sind, wenn keine Verkan-tungen auftreten sollen. Das Gewicht des Rotationskörpers einschließlich seiner Halteelemente wird offensichtlich nicht von den Holmen aufgenommen, sondern über am unteren Halteelement angeordnete Rollen vom Maschinenbett, um die als Zugelemente verwendeten Holme nicht mit zusätzlichen Kräften zu belasten, die sonst senkrecht nach unten an diesen angreifen und deren Funktionsweise beeinträchtigen würden. Das Auswechseln des vorliegenden Kernträgerkörpers oder Formhälftenträgers erfordert auch in diesem Fall die vollständige Demontage und Reinstallation zumindest der gesamten Schließeinheit der in Rede stehenden Spritzgießmaschine.

In der Druckschrift JP-A-62060618 & Patent Abstracts of Japan vol. 11, no. 250 (M-616) ist eine Spritzgießmaschine dargestellt, die einen um eine vertikale Drehachse rotierbaren Kernträgerkörper oder auch Formhälftenträger aufweist, der zwischen zwei von Holmen geführten Lagerplatten angeordnet ist. Nähere Angaben zu diesem Teil der Spritzgießmaschine sind im Text nicht aufzufinden, der sich ausschließlich mit dem Schließmechanismus einschließlich einer Klemmvorrichtung für die Holme beschäftigt. Da die gezeigten Holme primär als Zugelemente für die über Rollen auf dem Maschinenbett abgestützte verfahrbare Formaufspannplatte dienen, eine Abstützung des Kernträgerkörpers oder Formhälftenträgers auf dem Maschinenbett aber nicht erkennbar ist, kann die vorliegende Spritzgießmaschine nur zur Erzeugung kleiner und leichter Kunststoffartikel dienen, weil sonst ebenfalls erhebliche Kräfte senkrecht nach unten an den Holmen angreifen und deren Funktionsweise beeinträchtigen würden. Merkmale, die die vollständige Demontage und Reinstallation der gesamten Schließeinheit für ein Auswechseln des Kernträgerkörpers oder Formhälftenträgers vermeiden würden, sind auch hier weder zu erkennen noch nahegelegt.

Letzteres gilt auch für den Gegenstand der Druckschrift "Multifunctional Molding" Japan Plastics Age, Bd. 25, Nr. 215, Mai 1987 - Juni 1987, Seiten 21-23, wo der Zeichnung ein um jeweils 180° um eine vertikale Drehachse rotierbarer Kernträgerkörper oder Formhälftenträger zu entnehmen ist, dessen Drehachse in zwei oben und unten von Holmen geführten Halteelementen lagert, dessen Holme aber offensichtlich ebenfalls als Zugelemente dienen, die auf der dem Kernträgerkörper oder Formhälftenträger abgekehrten Seite der verfahrbaren Formaufspannplatte nicht in einer Druckplatte, sondern frei enden, und dessen Gewicht einschließlich desjenigen der Halteelemente offensichtlich über eine gemeinsame Schiene für die verfahrbare Formaufspannplatte und das untere Halteelement und nicht dargestellte Rollen vom Maschinenbett getragen wird.

Aus diesem Grunde liegt der vorliegenden Erfindung die Aufgabe zugrunde, eine Spritzgießmaschine des beschriebenen Standes der Technik dahingehend zu verbessern, daß mit ihr auch großvolumige und/oder großflächige Spritzgießartikel, die aus mindestens zwei Kunststoffschmelzen aufgebaut sind, in einem Maschinenzyklus herstellbar sind, wobei es jederzeit möglich ist, nicht nur einzelne Formhälften, sondern einen zwischen den üblichen Formaufspannplatten mit ihren Formhälften angeordneten, verfahrbaren und verschwenkbaren Formhälftenträger risikolos und auf einfache Weise auszutauschen.

Die vorliegende Erfindung löst diese Aufgabe mit Hilfe der Gesamtheit der Merkmale des Patentanspruchs 1.

Dabei erweist es sich als besonders vorteilhaft, daß die weitere Formaufspanneinrichtung aus zwei in einer im wesentlichen vertikal ausgerichteten Ebene mit Abstand übereinander angeordneten und jeweils an mindestens zwei in einer im wesentlichen horizontal ausgerichteten Ebene angeordneten Holmen geführten stabilen Trägerblöcken, die jeweils mit einem Lager für die im wesentlichen vertikal ausgerichtete Drehachse eines prismenförmigen Formhälftenträgers versehen sind, aus diesem der Aufnahme der weiteren Formhälften dienenden Formhälftenträger und aus mindestens zwei Antriebseinrichtungen, mittels derer der jeweilige relative Abstand zwischen den Formaufspannplatten und jedem einzelnen Trägerblock in Längsrichtung der Holme veränderbar ist, besteht, wobei Lager und/oder Drehachse derart ausgebildet sind, daß die von den Lagern bewirkte Halterung der Drehachse ohne Entfernung der Trägerblöcke von den sie tragenden Holmen lösbar ist, weil eine solche Anordnung eine stabile Halterung auch für einen verhältnismäßig großen und/oder schweren Formhälftenträger darstellt, und zwar unabhängig von der jeweiligen relativen Entfernung zwischen den Formaufspannplatten und dem Formhälftenträger, wobei diese Stabilität vorteilhafterweise noch dadurch erhöht werden kann, daß sich der dem Maschinenrahmen unmittelbar benachbarte - untere - Trägerblock mittels Rollen und/oder Kufen auf dem die unterhalb der Holme verlaufende Begrenzung des Maschinenrahmens bildenden Maschinenbett abstützt. Die Trennung der gesamten Formaufspanneinrichtung in zwei im wesentlichen horizontal angeordnete stabile Trägerblöcke, von denen jeder mit mindestens einer eigenen Antriebseinrichtung versehen ist, und einen mit einer im wesentlichen vertikal ausgerichteten Drehachse versehenen Formhälftenträger erweist sich darüber hinaus insbesondere bei einer erforderlichen Auswechslung des Formhälftenträgers als sehr vorteilhaft, da dann einerseits nur die Masse des eigentlichen Formhälftenträgers bewegt werden muß und andererseits mittels der getrennten Antriebseinrichtungen für die Trägerblöcke eine exakte Einjustierung eines neu eingesetzten Formhälftenträgers ermöglicht wird, bevor diese Antriebseinrichtungen anschließend nur noch synchron betrieben werden.

Eine vorteilhafte Weiterbildung der in Rede stehenden Vorrichtung ist auch dann gegeben, wenn der Formhälftenträger auf seinen den Trägerblöcken zugewandten Außenflächen mit kraftschlüssig oder einstückig mit ihm verbundenen und seine Drehachse verifizierenden Drehzapfen verbunden ist, weil dies bei gleichzeitiger Minimierung der Masse der Drehachse eine spielfreie Zuordnung des Formhälftenträgers zu seiner Drehachse sicherstellt, so daß die jeweils einwandfreie Positionierung des Formhälftenträgers zwischen den Formaufspannplatten nur noch von der Gestaltung und der Justierung der in den Trägerblöcken angeordneten Lager abhängt.

Als besonders vorteilhaft erweist sich dabei eine Ausführungsform der erfindungsgemäßen Vorrichtung, bei der die Länge der Drehzapfen so bemessen ist, daß sie in die in den Trägerblöcken angeordneten Lager in hinreichendem Maße hineinragen, und daß mindestens eines der Lager in den Trägerblöcken in Richtung auf eine der Pormaufspannplatten zu öffnen und nach der Freigabe und/oder der Aufnahme eines Drehzapfens wieder zu schließen ist, weil dies vor allem das Auswechseln schwerer Formhälftenträger sehr vereinfacht, indem zu diesem Zweck insbesondere das Lager des oberen Trägerblockes geöffnet, der Trägerblock mittels seiner mindestens einen Antriebseinrichtung kurzfristig und separat in Richtung auf eine der Formaufspannplatten weggefahren, der Formhälftenträger mittels entsprechender Anschlagmittel bekannter Art von einem Deckenkran erfaßt, senkrecht aus dem im unteren Trägerblock angeordneten Lager herausgezogen und dann entfernt werden kann, während anschließend ein neuer Formhälftenträger in umgekehrter Reihenfolge einsetzbar ist, wobei abschließend mittels der mindestens einen Antriebseinrichtung des oberen Trägerblockes die Drehachse sehr genau ausgerichtet werden kann, bevor im Normalbetrieb alle Antriebseinrichtungen der Trägerblöcke wieder synchron betätigt werden.

Bei einer weiteren Ausführungsform der vorliegenden Vorrichtung ist es dagegen als vorteilhaft anzusehen, daß die Drehzapfen vor den Eingangsöffnungen der Lager enden, dort jedoch mittels Kupplungsvorrichtungen bekannter Art mit ständig in den Lagern gehaltenen und aus den Eingangsöffnungen der Lager stückweise herausstehenden weiteren Drehzapfen form- und/oder kraftschlüssig verbindbar sind, da dies - beispielsweise mangels eines entsprechenden Deckenkranes oder sonstiger Gegebenheiten - ebenfalls auf einfache Weise das Auswechseln von Formhälftenträgern gestattet, indem - beispielsweise nach Ausrichten des Formhälftenträgers in eine vorgegebene Winkelstellung und anschließendes Lösen entsprechender Sicherungsbolzen - der Formhälftenträger mittels einer geeigneten Werkzeugwechselvorrichtung bekannter Art seitlich aus dem Bereich der Trägerblöcke herausgezogen bzw. in umgekehrter Reihenfolge eingesetzt wird.

Als vorteilhaft ist auch eine Ausführungsform der erfindungsgemäßen Vorrichtung anzusehen, bei der der Formhälftenträger senkrecht zu seiner Drehachse eine Querschnittsfläche in Form eines regelmäßigen geradzahligen Vielecks aufweist, wobei jede parallel zur Drehachse angeordnete Seitenfläche als Anschlagfläche für mindestens eine weitere Formhälfte verwendbar ist, da damit von vornherein eine große Flexibilität der einmal vorhandenen Spritzgießmaschine erreicht wird, insbesondere dann, wenn außerdem noch im zusammengefahrenen Zustand der mit Formhälften bestückten Formaufspannplatten und des mit weiteren Formhälften bestückten Formhälftenträgers an die von weiteren, nicht den Formaufspannplatten unmittelbar gegenüberstehenden Seitenflächen des Formhälftenträgers gehaltenen weiteren Formhälften zur Ausbildung zusätzlicher kompletter Spritzgießformen ergänzende Formhälften anlegbar sind, die von in jeweils vorgegebener Richtung verfahrbaren und jeweils mit mindestens einer zugehörigen Plastifizier- und Einspritzeinheit bestückten weiteren Formaufspannplatten getragen werden, womit in einem Maschinenzyklus entweder ein Spritzgießartikel aus mehr als zwei Kunststoffschmelzen aufgebaut werden kann oder mehr als ein Spritzgießartikel aus jeweils mindestens zwei Kunststoffschmelzen gleichzeitig hergestellt werden können.

Bei einer anderen Ausführungsform der vorliegenden Vorrichtung ist es dagegen als sehr vorteilhaft anzusehen, daß der Formhälftenträger senkrecht zu seiner Drehachse eine Querschnittsfläche in Form eines unregelmäßigen geradzahligen Vielecks aufweist, wobei nur bestimmte Paare von untereinander und relativ zur Drehachse parallel angeordneten Seitenflächen als Anschlagflächen für jeweils mindestens eine weitere Formhälfte verwendbar sind, insbesondere in dem Fall, daß der Formhälftenträger senkrecht zu seiner Drehachse eine Querschnittsfläche in Form eines gestreckten Rechtecks aufweist, wobei nur die parallel zur Drehachse angeordneten und die Längskanten des Rechtecks ausbildenden Seitenflächen als Anschlagflächen für jeweils mindestens eine weitere Formhälfte verwendet werden, da es mit einer solchen Gestaltung des Formhälftenträgers - zumindest in dem Fall, daß von vornherein eine Begrenzung der Zahl seiner parallel zu seiner Drehachse ausgerichteten Seitenflächen, die mit Formhälften bestückbar sind, akzeptiert wird - ermöglicht wird, den Formhälftenträger mit einem kleineren Volumen und damit auch mit einer kleineren Masse zu versehen, was einerseits den Aufwand für seine Abstandsänderungen zu den Formaufspannplatten und seine Verschwenkbewegungen verringert und andererseits eine merkliche Verkürzung der Zykluszeiten der Gesamtvorrichtung gestattet.

Als vorteilhaft erweist sich auch eine Weiterbildung der in Rede stehenden Vorrichtung, bei der mindestens einer der Drehzapfen direkt oder über ein Getriebe mit einem an oder auf dem unmittelbar benachbarten Trägerblock angeordneten Antriebsmotor verbunden ist, da mit einer solchen Anordnung - vor allem bei schweren Formhälftenträgern - auf minimalem Übertragungswege ein einwandfreies Verschwenken von einer in die andere vorgegebene Position gewährleistet wird, wobei der Antriebsmotor beispielsweise ein Elektromotor oder ein Hydromotor bekannter Art sein kann, der in besonders vorteilhafter Weise jeweils über einen Winkelcodierer gesteuert wird.

Eine vorteilhafte Ausführungsform der erfindungsgemäßen Vorrichtung ist auch gegeben, wenn die erwünschten Endstellungen der Schwenkbewegungen des Formhälftenträgers um seine im wesentlichen vertikal ausgerichtete Drehachse mittels eines oder mehrerer Indexelemente kontrolliert und fixiert werden, weil damit einerseits die Arbeit des Antriebsmotors von einem unabhängigen Überwachungselement kontrolliert und andererseits sichergestellt wird, daß der - schwere - Formhälftenträger bei abgeschaltetem Antriebsmotor keine selbständigen Driftbewegungen um seine Drehachse ausführt, wobei dies vorteilhafterweise dadurch verifizierbar ist, daß als Indexelement ein an einem Trägerblock festgelegter hydraulisch betätigter Haltestift verwendet wird, der jeweils mit einer komplementären Bohrung in der dem ihn haltenden Trägerblock zugewandten Außenseite des Formhälftenträgers zusammenwirkt, oder daß als Indexelement ein an einem Trägerblock festgelegter Haltestift verwendet wird, der mittels Federkraft eine rollbare Kugel auf die dem ihn haltenden Trägerblock zugewandten Außenseite des Formhälftenträgers drückt, bei Erreichen einer gewünschten Endstellung in eine vorgegebene Bohrung in der Außenseite eintaucht und mittels eines Elektromagneten aus dieser Bohrung zurückziehbar ist und somit eine Kugelrasteinrichtung bekannter Art ausbildet.

Bei einer anderen Weiterbildung der vorliegenden Vorrichtung erweist es sich auch als vorteilhaft, daß die weiteren Formhälften am Formhälftenträger auswechselbar befestigt sind, insbesondere dann, wenn außerdem die Befestigung der weiteren Formhälften am Formhälftenträger mittels Schnellverschlüssen bekannter Art erfolgt, weil damit eine besonders hohe Flexibilität der gesamten Vorrichtung hinsichtlich des von ihr herstellbaren Artikelsortiments erreicht wird.

Als sehr vorteilhafte Weiterbildung der in Rede stehenden Vorrichtung ist auch eine solche anzusehen, bei der die Antriebseinrichtungen zur Veränderung des jeweiligen relativen Abstandes zwischen den Formaufspannplatten und jedem Trägerblock hydraulisch betätigte Kolben-Zylinder-Einheiten sind, die mit ihrem einen Endbereich kraftschlüssig mit der verfahrbaren Formaufspannplatte und mit ihrem anderen Endbereich kraftschlüssig mit einem der Trägerblöcke verbunden und parallel zur Längsrichtung der Holme verfahrbar sind, da es sich bei solchen Antriebseinrichtungen um bekannte und bewährte Aggregate handelt, mit denen gewünschte Positionen mit großer Präzision anfahrbar sind und die bei der hier gewählten Konstruktionsform gewährleisten, daß zunächst immer ein eindeutiger Zusammenhang zwischen dem Formhälftenträger und der verfahrbaren Formaufspannplatte herstellbar ist, bevor beide gemeinsam über die Schließeinheit mit der feststehenden Formaufspannplatte in Wechselwirkung treten. Das erweist sich insbesondere dann als vorteilhaft, wenn die in Rede stehende Vorrichtung aus betrieblichen Gründen zeitweise als einfache Einkomponenten-Spritzgießmaschine mit einem Standardwerkzeug verwendet werden soll, dessen zweite Formhälfte dann für eine Reihe von Spritzgießzyklen an einer vorgegebenen Seitenfläche des nunmehr unverschwenkbar benutzten Formhälftenträgers festlegbar ist. In entsprechender Weise kann der Formhälftenträger - wenn aus betrieblichen Gründen wünschenswert oder erforderlich - mit der in Rede stehenden Anordnung in vorteilhafter Weise auch zeitweise als Mittelblock eines Etagenwerkzeugs bekannter Art zur Herstellung jeweils zweier gleicher oder unterschiedlicher Spritzgießartikel aus jeweils mindestens einer Kunststoffschmelze verwendet werden.

Bei einer weiteren Ausführungsform der erfindungsgemäßen Vorrichtung ist es auch als vorteilhaft anzusehen, daß einzelne oder alle Formhälften an mindestens einer ihrer sich zwischen Anlagefläche und Trennebene erstreckenden Seitenflächen mindestens eine Eingangsöffnung eines Angußkanals zum Anschluß jeweils einer geeignet ausgerichteten und verfahrbaren Plastifizier- und Einspritzeinheit aufweisen, weil sich damit die Angußkanäle zwischen dem Düsenausgang jeder - normalerweise mit Ausnahme der durch die feststehende Formaufspannplatte hindurchgeführten - Plastifizier- und Einspritzeinheit und dem jeweiligen Formnest einer Spritzgießform gegenüber dem vorgegebenen Stand der Technik wesentlich verkürzen lassen - jedenfalls dann, wenn die jeweilige Höhe der betroffenen Formhälfte rein räumlich gesehen eine solche Anlage der Düse einer Plastifizier- und Einspritzeinheit zuläßt. Als entsprechend vorteilhaft erweist sich - zumindest in speziellen Anwendungsfällen - auch eine Weiterbildung der vorliegenden Vorrichtung, bei der der Formhälftenträger an mindestens einer seiner parallel zu seiner Drehachse ausgerichteten Seitenflächen mindestens eine Eingangsöffnung eines Angußkanals zum Anschluß jeweils einer geeignet ausgerichteten und verfahrbaren Plastifizier- und Einspritzeinheit aufweist, wobei jeder Angußkanal zur Beaufschlagung mindestens einer von dem Formhälftenträger gehaltenen und im geschlossenen Zustand mit einer der auf einer der Formaufspannplatten befestigten Formhälften eine vollständige Spritzgießform ausbildenden weiteren Formhälften mit einer vorgegebenen Kunststoffschmelze dient, weil dies die Flexibilität der gesamten Vorrichtung deutlich erhöht, und zwar sowohl bezüglich der in jedem individuellen Fall möglichen Raumausnutzung als auch der Möglichkeit, das Formnest einer Spritzgießmaschine gegebenenfalls gleichzeitig oder unmittelbar aufeinander folgend mit mehr als einer Kunststoffschmelze zu füllen.

Ein Ausführungsbeispiel der erfindungsgemäßen Vorrichtung ist in der Zeichnung dargestellt.

Es zeigen:
- Fig. 1:: Ausschnitt aus der Seitenansicht einer Spritzgießmaschine mit allen für die vorliegende Erfindung wesentlichen Bestandteilen einer solchen Vorrichtung in schematischer und teilweise durchbrochener Darstellung.
- Fig. 2:: Schnitt A - A aus Fig. 1 - in ebenfalls schematischer und teilweise durchbrochener Darstellung.

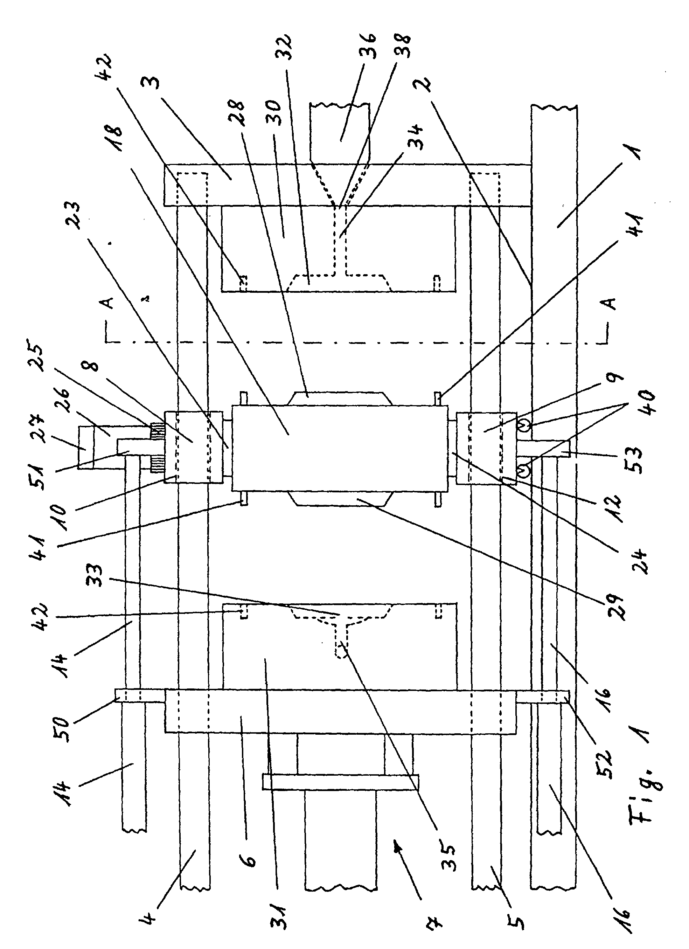

Die Fig. 1 zeigt einen Ausschnitt aus der Seitenansicht einer Spritzgießmaschine mit allen für die vorliegende Erfindung wesentlichen Bestandteilen einer solchen Maschine in schematischer und teilweise durchbrochener Darstellung. Demzufolge ist auf einem hier - da von bekannter Art - nur angedeuteten Maschinenrahmen 1, dessen oberer Randbereich als Maschinenbett 2 ausgebildet ist, eine feststehende Formaufspannplatte 3 aufgeständert und kraftschlüssig mit dem Maschinenrahmen 1 verbunden, die im vorliegenden Fall zwei Paare von kraftschlüssig mit ihr verbundenen und im wesentlichen horizontal ausgerichteten Holmen 4, 5 - von denen in der vorliegenden Zeichnung nur jeweils ein Holm 4, 5 jedes Paares sichtbar ist - hält. Die Paare von Holmen 4, 5 führen zu einer hier - da gleichfalls von bekannter Art - nicht explizit dargestellten Gegendruckplatte, die ebenfalls auf dem Maschinenrahmen 1 aufgeständert und kraftschlüssig mit diesem sowie mit den anderen Enden der Paare von Holmen 4, 5 verbunden ist. Auf den Holmen 4, 5 ist eine auf diesen verfahrbare Formaufspannplatte 6 in bekannter Art und Weise angeordnet, die mittels einer hier - da ebenfalls von bekannter Art - nur angedeuteten Schließeinheit 7, beispielsweise einer zwischen Gegendruckplatte und verfahrbarer Formaufspannplatte 6 angeordneten und wirksamen hydraulisch betätigten Kolben-Zylinder-Anordnung oder einem statt dessen von einer hydraulischen Kolben-Zylinder-Anordnung oder auch von einem Elektromotor über eine Ritzel-Zahnstangen-Anordnung betätigten Kniehebelmechanismus oder einer sonstigen als gleichwirkendes Mittel anzusehenden Antriebsvorrichtung, auf den Holmen 4, 5 verfahren wird.

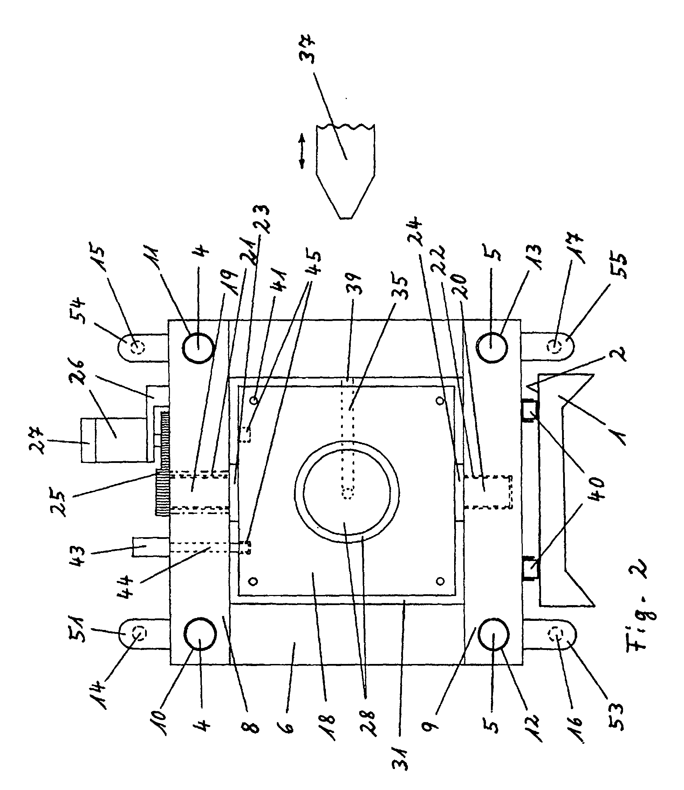

Auf jedem Paar von Holmen 4, 5 ist außerdem zwischen den Formaufspannplatten 3, 6 je ein im wesentlichen horizontal ausgerichteter stabiler Trägerblock 8, 9 angeordnet, der die ihn tragenden Holme 4, 5 mit Führungsbohrungen 10, 11, 12, 13 - von denen hier nur die Führungsbohrungen 10, 12 sichtbar sind (vgl. Fig. 2) - umfaßt und mittels zweier - was jedoch nicht zwangsläufig und durch jede Anzahl von "mindestens einer" ersetzbar ist - Antriebseinrichtungen 14, 15, 16, 17 - von denen hier nur die Antriebseinrichtungen 14, 16 sichtbar sind (vgl. Fig. 2) - auf den ihn tragenden Holmen 4, 5 seinerseits relativ zu den Formaufspannplatten 3, 6 verfahrbar ist. Die Antriebseinrichtungen 14, 15, 16, 17 sind im dargestellten Fall hydraulisch betätigte Kolben-Zylinder-Anordnungen, die sowohl mit der verfahrbaren Formaufspannplatte 6 als auch mit dem jeweiligen Trägerblock 8, 9 - beispielsweise über Anschlaglaschen 50, 51, 52, 53, 54, 55 bekannter Art, von denen die Anschlaglaschen 54, 55 allerdings erst in Fig. 2 sichtbar sind - kraftschlüssig verbunden sind, wobei die hydraulisch betätigten Kolben-Zylinder-Anordnungen selbstverständlich einerseits auch durch jedes andere gleichwirkende Mittel, beispielsweise von Elektromotoren betätigte Spindeltriebe oder Ritzel-Zahnstangen-Anordnungen, ersetzbar und andererseits auch nicht zwangsläufig an der verfahrbaren Formaufspannplatte 6, sondern statt dessen an der feststehenden Formaufspannplatte 3 oder unmittelbar am Maschinenrahmen 1 festlegbar sind, auch wenn es sich in der Vergangenheit, beispielsweise bei den Etagen-Spritzgießmaschinen, als zweckmäßig herausgestellt hat, die Steuerung eines zusätzlich zur verfahrbaren Formaufspannplatte 6 zu verschiebenden Bauteils einer Spritzgießmaschine so mit der Steuerung der verfahrbaren Formaufspannplatte 6 zu koordinieren, daß der Bewegungszustand der letzteren als primäre Bezugsgröße für die Bewegung des zusätzlichen Bauteils herangezogen wird.

Die Trägerblöcke 8, 9 halten im dargestellten - aber nicht zwangsläufigen - Fall einen als quadratische - oder gegebenenfalls auch rechteckige - Platte ausgebildeten und um eine im wesentlichen vertikal ausgerichtete und ein Paar der Schmalseiten der Platte durchstoßende Drehachse verschwenkbaren Formhälftenträger 18, der mittels in Fig. 2 dargestellter, kraftschlüssig mit der Platte verbundener und miteinander fluchtender Drehzapfen 19, 20 - die selbstverständlich auch durch eine durchgehende, ebenfalls kraftschlüssig mit dem plattenförmigen Körper des Formhälftenträger 18 verbundene Achse ersetzbar sind - mit in den Trägerblöcken 8, 9 derart angeordneten Lagern 21, 22 in Eingriff steht, daß diese bei Parallelstellung der Trägerblöcke 8, 9 in einer im wesentlichen vertikal ausgerichteten Ebene miteinander fluchten. Zur Erleichterung der Schwenkbewegungen des Formhälftenträgers 18 ist im jeweiligen Fußbereich der Drehzapfen 19, 20 je ein Gleit- oder Drehlager 23, 24 bekannter Art angeordnet, das die dem jeweiligen Trägerblock 8, 9 unmittelbar gegenüberstehende Außenfläche des Formhälftenträgers 18 schonend abstützt. Darüber hinaus ist der in das Lager 21 des oberen Trägerblocks 8 eingreifende Drehzapfen 19 über ein Getriebe 25 an einen in unmittelbarer Nachbarschaft auf dem oberen Trägerblock 8 angeordneten Antriebsmotor 26 bekannter Art, beispielsweise einen Elektro- oder Hydromotor, angekoppelt, der im dargestellten - jedoch ebenfalls nicht zwangsläufigen - Fall mittels eines ihn steuernden Winkelcodierers 27 die Schwenkbewegungen des Formhälftenträgers 18 bewirkt.

Selbstverständlich können die vorgenannten Konstruktionselemente der Spritzgießmaschine auch durch jedes gleichwirkende Mittel bekannter Art ersetzt werden, so beispielsweise die quadratische oder rechteckige Platte durch einen beliebig geformten, zweckentsprechenden prismatischen Körper mit einer senkrecht zur Drehachse geschnittenen Querschnittsfläche in Form eines regelmäßigen oder auch unregelmäßigen geradzahligen oder ungradzahligen Vielecks, das nur ein oder mehrere Paare von parallel zueinander und zur Drehachse ausgerichteten Seitenflächen aufweisen muß, oder der auf dem oberen Trägerblock 8 angeordnete Antriebsmotor 26 durch einen solchen, der ohne Zwischenschaltung eines Getriebes 25 unmittelbar an den Drehzapfen 19 angekoppelt ist, oder aber durch eine - zusätzliche oder alternative - gleichartige Anordnung mit oder ohne Getriebe 25 an oder auf dem unteren Trägerblock 9. Ebenso kann der durch einen Winkelcodierer gesteuerte Antriebsmotor beispielsweise durch einen elektrischen Servomotor ersetzt werden. Auch lassen sich die Drehzapfen 19, 20 - oder eine an ihrer,Stelle verwendete durchgehende Achse - derart gestalten, daß eine Teillänge von ihnen dauerhaft in den Lagern 21, 22 gehalten wird und nur mit vorgegebenem Längenanteil aus den Lagern 21, 22 herausragt, während am Formhälftenträger 18 nur entsprechend verkürzte Teilbereiche der Drehzapfen 19, 20 vorhanden sind, die außerhalb der Lager 21, 22 mit den vorgenannten Längenanteilen mittels Kupplungsvorrichtungen bekannter Art form- und kraftschlüssig verbindbar und sicherbar sind.

Der Formhälftenträger 18 trägt und hält auf seinen beiden großen Flächen weitere Formhälften 28, 29, die auch als einfache Kerne ausgebildet sein können und die im zusammengefahrenen Zustand nach der entsprechenden Betätigung der Schließeinheit 7 mit den auf den Formaufspannplatten 3, 6 in bekannter Weise gehaltenen Formhälften 30, 31 vervollständigte Spritzgießformen 32, 33 ausbilden, die über Angußkanäle 34, 35 von je einer Plastifizier- und Einspritzeinheit 36, 37 (s. a. Fig. 2), die hier - da von bekannter Art - nur angedeutet sind, mit Kunststoffschmelzen beaufschlagt werden, wobei eine Spritzgießform 32, 33 grundsätzlich auch über mehrere - hier nicht explizit dargestellte - Angußkanäle von einer oder mehreren Plastifizier- und Einspritzeinheiten 36, 37 gleichzeitig oder unmittelbar nacheinander mit einer oder mehreren - dann normalerweise unterschiedlichen - Kunststoffschmelzen beaufschlagbar ist. Die Angußkanäle 34, 35 können dabei gegebenenfalls - was hier ebenfalls nicht explizit dargestellt ist - auch durch die verfahrbare Formaufspannplatte 6 oder den Formhälftenträger 18 verlaufen; bezüglich der Plastifizier- und Einspritzeinheiten 36, 37 wird hier im allgemeinen - mit Ausnahme der üblicherweise auf der den Spritzgießformen 32, 33 abgekehrten Seite der feststehenden Formaufspannplatte 3 installierten Plastifizier- und Einspritzeinheit 36 - vorausgesetzt, daß sie verfahrbar im Seitenbereich der Spritzgießmaschine vorgehalten und nur im geschlossenen Zustand der Spritzgießformen 32, 33 an die jeweiligen Angußöffnungen 39 angelegt werden.

Die vorliegende Spritzgießmaschine ist dazu bestimmt, Spritzgießartikel aus mindestens zwei Kunststoffschmelzen aufzubauen, die nicht durch gleichzeitiges oder unmittelbar nacheinander erfolgendes Einspritzen mehrerer Kunststoffschmelzen in eine einzige Spritzgießform zur Erzeugung sandwichartig aufgebauter Spritzgießartikel herstellbar sind. Zu diesem Zweck wird nach dem Zusammenfahren der Spritzgießformen 32, 33 beispielsweise in der rechts dargestellten Spritzgießform 32 nur ein verlorener Kern aus einer von der Plastifizier- und Einspritzeinheit 36 gelieferten Kunststoffschmelze gespritzt, während in der links dargestellten Spritzgießform 33 ein zuvor in der Spritzgießform 32 erzeugter verlorener Kern mit einer von der Plastifizier- und Einspritzeinheit 37 gelieferten Kunststoffschmelze vervollständigt wird. Danach werden die Formaufspannplatten 3, 6 und der Formhälftenträger 18 mittels der Schließeinheit 7 und der Antriebseinrichtungen 14, 15, 16, 17 auseinandergefahren, der Formhälftenträger 18 mittels des Antriebsmotors 26 um einen Winkel von 180° um seine im wesentlichen vertikal ausgerichtete Drehachse verschwenkt, der fertiggestellte Spritzgießartikel aus der Spritzgießform 33 an geeigneter Stelle seines Schwenkweges ausgestoßen und die Spritzgießformen 32, 33 zur Wiederholung der vorgenannten Einspritzvorgänge wieder zusammengefahren. Bei Verwendung eines Formhälftenträgers 18 mit einer anderen Querschnittsfläche senkrecht zu seiner Drehachse als in der dargestellten Form vorausgesetzt, insbesondere einer als regelmäßiges geradzahliges Vieleck ausgestalteten Querschnittsfläche, lassen sich bei kleineren Schwenkschritten von beispielsweise 90° oder 60° um die Drehachse entweder in einem Maschinenzyklus mehrere Spritzgießartikel aus zwei Kunststoffschmelzen oder auch ein oder einige wenige Spritzgießartikel aus mehr als zwei Kunststoffschmelzen herstellen. Die Kunststoffschmelzen können dabei unterschiedliche Materialeigenschaften, unterschiedliche Farben oder unterschiedliche Eigenschaften ihrer Lichtdurchlässigkeit aufweisen, in bestimmten Fällen aber auch durchaus identisch sein, wenn die herzustellenden Spritzgießartikel zu ihrer Qualitätsverbesserung einen schrittweisen Herstellungsprozeß aus ein- und demselben Material nahelegen.

Für besonders schwere Formhälftenträger ist es empfehlenswert, den unteren Trägerblock 9 zusätzlich mittels Rollen und/oder Kufen 40 auf dem Maschinenbett 2 abzustützen. Außerdem kann der Formhälftenträger 18 noch mit Justierdornen 41 versehen sein, die mit entsprechenden Bohrungen in den von den Formaufspannplatten 3, 6 gehaltenen Formhälften 30, 31 wechselwirken, was selbstverständlich auch bei umgekehrter Anordnung dieser Einrichtungen durchführbar ist.

Die Fig. 2 , in der bereits in Fig. 1 verwendete Bezugszeichen identische Konstruktionselemente wie dort bezeichnen, zeigt zusätzlich zur Fig. 1 die paarweise Anordnung der Holme 4, 5, die vollständige Anordnung der Antriebseinrichtungen 14, 15, 16, 17, den Verlauf des Angußkanals 35 mit der Angußöffnung 39 in der Formhälfte 31 einschließlich der - allerdings nur angedeuteten - Plastifizier- und Einspritzeinheit 37 sowie die Drehzapfen 19, 20 in den Lagern 21, 22, wobei die strichpunktierten Linien neben dem Lager 21 in dem oberen Tragblock 8 symbolisch andeuten, daß dieses Lager 21 in Richtung auf eine der Formaufspannplatten 3, 6 geöffnet werden kann, um den Drehzapfen 19 und damit den gesamten Formhälftenträger 18 für eine Auswechslung mittels - nicht dargestelltem - Deckenkran oder einem entsprechenden Hilfsmittel freizugeben. Darüber hinaus verdeutlicht die Fig. 2 die Kopplung des Antriebsmotors 26 und des Drehzapfens 19 über das Getriebe 25 und zeigt zusätzlich ein Indexelement 43, das zur zusätzlichen Festlegung der jeweiligen Endstellung der Schwenkbewegungen des Formhälftenträgers 18 und insbesondere auch zur Vermeidung von Driftbewegungen dieses Formhälftenträgers 18 bei abgeschaltetem Antriebsmotor 26 dient. Von dem Indexelement 43 ist hier vorausgesetzt, daß es sich um einen von einer am oberen Trägerblock 8 festgelegten hydraulisch betätigten Kolben-Zylinder-Anordnung verschiebbaren Haltestift 44 handelt, der mit entsprechenden Haltebohrungen 45 in der dem Trägerblock 8 unmittelbar gegenüberliegenden Außenfläche des Formhälftenträgers 18 wechselwirkt. Selbstverständlich kann ein solches Indexelement auch durch jedes andere gleichwirkende Mittel ersetzt werden, beispielsweise durch eine bereits oben im Detail beschriebene elektromagnetisch entriegelbare Kugelrasteinrichtung. Im übrigen ist auch die dargestellte Anordnung der Holme 4, 5 nicht zwangsläufig, sondern kann selbstverständlich auch durch eine solche ersetzt werden, bei der der obere Trägerblock 8 oder der untere Trägerblock 9 oder beide jeweils durch mehr als zwei Holme 4, 5 getragen und abgestützt werden.

Selbstverständlich beschränkt sich das mit den vorstehenden Ausführungen nachgesuchte Patentbegehren nicht auf das dargestellte Ausführungsbeispiel, sondern betrifft alle von der Merkmalskombination des Patentanspruchs 1 erfaßten möglichen Ausführungsformen einer Vorrichtung zur Herstellung von Spritzgießartikeln aus mindestens zwei Kunststoffschmelzen.

### Bezugszeichenliste

- 1: Maschinenrahmen
- 2: Maschinenbett
- 3: feststehende Formaufspannplatte
- 4,5: Holme
- 6: verfahrbare Formaufspannplatte
- 7: Schließeinheit bekannter Art
- 8,9: Trägerblöcke
- 10,11,12,13': Führungsbohrungen
- 14,15,16,17: Antriebseinrichtungen
- 18: Formhälftenträger
- 19,20: Drehzapfen
- 21,22: Lager
- 23,24: Gleit- oder Drehlager
- 25: Getriebe
- 26: Antriebsmotor
- 27: Winkelcodierer
- 28,29: weitere Formhälften
- 30,31: Formhälften
- 32,33: Spritzgießformen
- 34,35: Angußkanäle
- 36,37: Plastifizier- und Einspritzeinheiten
- 38,39: Angußöffnungen
- 40: Rollen und/oder Kufen
- 41: Justierdorne
- 42: Bohrungen
- 43: Indexelement
- 44: Haltestift
- 45: Haltebohrungen
- 50,51,52,53,54,55: Anschlaglaschen

## Patentansprüche

1. Vorrichtung zur Herstellung von Spritzgießartikeln aus mindestens zwei Kunststoffschmelzen, die zwischen einer ortsfest auf einem Maschinenrahmen (1) installierten feststehenden Formaufspannplatte (3) und einer auf mindestens vier zwischen der feststehenden Formaufspannplatte (3) und einer ebenfalls ortsfest auf dem Maschinenrahmen (1) installierten Gegendruckplatte angeordneten, im wesentlichen horizontal verlaufenden Holmen (4,5) verfahrbaren Formaufspannplatte (6) eine relativ zu dieser ihrerseits verfahrbare und um eine senkrecht zur Längsachse der Holme (4,5) ausgerichtete Drehachse (19,20) verschwenkbare weitere Formaufspanneinrichtung (8,9,18) aufweist, die auf mindestens zwei mit Abstand untereinander und relativ zur Drehachse parallel ausgerichteten Seitenflächen mit den Formhälften (30,31) der Formaufspannplatten (3,6) zusammenwirkende weitere Formhälften (28,29) trägt, wobei jede der Formaufspannplatten (3,6) mit mindestens einer Öffnung (38,39) versehen ist, die den Anschluß jeweils einer Plastifizier- und Einspritzeinheit (36,37) an jeden von einem oder mehreren Angußkanälen (34,35) in den von den Formaufspannplatten (3,6) gehaltenen Formhälften (30,31) gestattet, wobei die weitere Formaufspanneinrichtung (8,9,18) aus zwei in einer im wesentlichen vertikal ausgerichteten Ebene mit Abstand übereinander angeordneten und jeweils an mindestens zwei in einer im wesentlichen horizontal ausgerichteten Ebene angeordneten Holmen (4,5) geführten stabilen Trägerblöcken (8,9), die jeweils mit einem Lager (21,22) für die im wesentlichen vertikal ausgerichtete Drehachse (19,20) eines prismenförmigen Formhälftenträgers (18) versehen sind, aus diesem der Aufnahme der weiteren Formhälften (28,29) dienenden Formhälftenträger (18) und aus mindestens zwei Antriebseinrichtungen (14,15,16,17), mittels derer der jeweilige relative Abstand zwischen den Formaufspannplatten (3,6) und jedem Trägerblock (8,9) in Längsrichtung der Holme (4,5) veränderbar ist, besteht, **dadurch gekennzeichnet, daß** Lager (21,22) und/oder Drehachse (19,20) derart ausgebildet sind, daß die von den Lagern (21,22) bewirkte Halterung der Drehachse (19,20) ohne Entfernung der Trägerblöcke (8,9) von den sie tragenden Holmen (4,5) lösbar ist.

2. Vorrichtung nach Anspruch 1,
**dadurch gekennzeichnet,**
**daß** der Formhälftenträger (18) auf seinen den Trägerblökken (8,9) zugewandten Außenflächen mit kraftschlüssig oder einstückig mit ihm verbundenen und seine Drehachse (19,20) verifizierenden Drehzapfen (19,20) verbunden ist.

3. Vorrichtung nach Anspruch 2,
**dadurch gekennzeichnet,**
**daß** die Länge der Drehzapfen (19,20) so bemessen ist, daß sie in die in den Trägerblöcken (8,9) angeordneten Lager (21,22) in hinreichendem Maße hineinragen, und daß mindestens eines der Lager (21,22) in den Trägerblöcken (8,9) in Richtung auf eine der Formaufspannplatten (3,6) zu öffnen und nach der Freigabe und/oder der Aufnahme eines Drehzapfens (19,20) wieder zu schließen ist.

4. Vorrichtung nach Anspruch 2,
**dadurch gekennzeichnet,**
**daß** die Drehzapfen (19,20) vor den Eingangsöffnungen der Lager (21,22) enden, dort jedoch mittels Kupplungsvorrichtungen bekannter Art mit ständig in den Lagern (21,22) gehaltenen und aus den Eingangsöffnungen der Lager (21,22) stückweise herausstehenden weiteren Drehzapfen form- und/oder kraftschlüssig verbindbar sind.

5. Vorrichtung nach einem der Ansprüche 1 bis 4,
**dadurch gekennzeichnet,**
**daß** sich der dem Maschinenrahmen (1) unmittelbar benachbarte - untere - Trägerblock mittels Rollen und/oder Kufen (40) auf dem die unterhalb der Holme (4,5) verlaufende Begrenzung des Maschinenrahmens (1) bildenden Maschinenbett (2) abstützt.

6. Vorrichtung nach einem der Ansprüche 1 bis 5,
**dadurch gekennzeichnet,**
**daß** der Formhälftenträger (18) senkrecht zu seiner Drehachse (19,20) eine Querschnittsfläche in Form eines regelmäßigen geradzahligen Vielecks aufweist, wobei jede parallel zur Drehachse (19,20) angeordnete Seitenfläche als Anschlagfläche für mindestens eine weitere Formhälfte (28,29) verwendbar ist.

7. Vorrichtung nach Anspruch 6,
**dadurch gekennzeichnet,**
**daß** im zusammengefahrenen Zustand der mit Formhälften (30,31) bestückten Formaufspannplatten (3,6) und des mit weiteren Formhälften (28,29) bestückten Formhälftenträgers (18) an die von weiteren, nicht den Formaufspannplatten (3,6) unmittelbar gegenüberstehenden Seitenflächen des Formhälftenträgers (18) gehaltenen weiteren Formhälften zur Ausbildung zusätzlicher kompletter Spritzgießformen ergänzende Formhälften anlegbar sind, die von in jeweils vorgegebener Richtung verfahrbaren und jeweils mit mindestens einer zugehörigen Plastifizier- und Einspritzeinheit bestückten weiteren Formaufspannplatten getragen werden.

8. Vorrichtung nach einem der Ansprüche 1 bis 5,
**dadurch gekennzeichnet,**
**daß** der Formhälftenträger (18) senkrecht zu seiner Drehachse (19,20) eine Querschnittsfläche in Form eines unregelmäßigen geradzahligen Vielecks aufweist, wobei nur bestimmte Paare von untereinander und relativ zur Drehachse parallel angeordneten Seitenflächen als Anschlagflächen für jeweils mindestens eine weitere Formhälfte (28,29) verwendbar sind.

9. Vorrichtung nach Anspruch 8,
**dadurch gekennzeichnet,**
**daß** der Formhälftenträger (18) senkrecht zu seiner Drehachse (19,20) eine Querschnittsfläche in Form eines gestreckten Rechtecks aufweist, wobei nur die parallel zur Drehachse (19,20) angeordneten und die Längskanten des Rechtecks ausbildenden Seitenflächen als Anschlagflächen für jeweils mindestens eine weitere Formhälfte (28,29) verwendet werden.

10. Vorrichtung nach einem der Ansprüche 2 bis 9,
**dadurch gekennzeichnet,**
**daß** mindestens einer der Drehzapfen (19,20) direkt oder über ein Getriebe (25) mit einem an oder auf dem unmittelbar benachbarten Trägerblock (8,9) angeordneten Antriebsmotor (26) verbunden ist.

11. Vorrichtung nach Anspruch 10,
**dadurch gekennzeichnet,**
**daß** der Antriebsmotor (26) ein Elektromotor bekannter Art ist.

12. Vorrichtung nach Anspruch 10,
**dadurch gekennzeichnet,**
**daß** der Antriebsmotor (26) ein Hydromotor bekannter Art ist.

13. Vorrichtung nach einem der Ansprüche 10 bis 12,
**dadurch gekennzeichnet,**
**daß** jeder Antriebsmotor (26) über einen Winkelcodierer (27) gesteuert wird.

14. Vorrichtung nach einem der Ansprüche 1 bis 13,
**dadurch gekennzeichnet,**
**daß** die erwünschten Endstellungen der Schwenkbewegungen des Formhälftenträgers (18) um seine im wesentlichen vertikal ausgerichtete Drehachse (19,20) mittels eines oder mehrerer Indexelemente (43) kontrolliert und fixiert werden.

15. Vorrichtung nach Anspruch 14,
**dadurch gekennzeichnet,**
**daß** als Indexelement (43) ein an einem Trägerblock (8,9) festgelegter hydraulisch betätigter Haltestift (44) verwendet wird, der jeweils mit einer komplementären Bohrung (45) in der dem ihn haltenden Trägerblock (8,9) zugewandten Außenseite des Formhälftenträgers (18) zusammenwirkt.

16. Vorrichtung nach Anspruch 14,
**dadurch gekennzeichnet,**
**daß** als Indexelement (43) ein an einem Trägerblock (8,9) festgelegter Haltestift verwendet wird, der mittels Federkraft eine rollbare Kugel auf die dem ihn haltenden Trägerblock (8,9) zugewandten Außenseite des Formhälftenträgers (18) drückt, bei Erreichen einer gewünschten Endstellung in eine vorgegebene Bohrung in der Außenseite eintaucht und mittels eines Elektromagneten aus dieser Bohrung zurückziehbar ist.

17. Vorrichtung nach einem der Ansprüche 1 bis 16,
**dadurch gekennzeichnet,**
**daß** die weiteren Formhälften (28,29) am Formhälftenträger (18) auswechselbar befestigt sind.

18. Vorrichtung nach Anspruch 17,
**dadurch gekennzeichnet,**
**daß** die Befestigung der weiteren Formhälften (28,29) am Formhälftenträger (18) mittels Schnellverschlüssen bekannter Art erfolgt.

19. Vorrichtung nach einem der Ansprüche 1 bis 18,
**dadurch gekennzeichnet,**
**daß** die Antriebseinheiten (14,15,16,17) zur Veränderung des jeweiligen relativen Abstandes zwischen den Formaufspannplatten (3,6) und jedem Trägerblock (8,9) hydraulisch betätigte Kolben-Zylinder-Einheiten sind, die mit ihrem einen Endbereich kraftschlüssig mit der verfahrbaren Formaufspannplatte (6) und mit ihrem anderen Endbereich kraftschlüssig mit einem der Trägerblöcke (8,9) verbunden und parallel zur Längsrichtung der Holme (4,5) verfahrbar sind.

20. Vorrichtung nach einem der Ansprüche 1 bis 19,
**dadurch gekennzeichnet,**
**daß** einzelne oder alle Formhälften (31) an mindestens einer ihrer sich zwischen Anlagefläche und Trennebene erstreckenden Seitenflächen mindestens eine Eingangsöffnung (39) eines Angußkanals (35) zum Anschluß jeweils einer geeignet ausgerichteten und verfahrbaren Plastifizier- und Einspritzeinheit (37) aufweisen.

21. Vorrichtung nach einem der Ansprüche 1 bis 20,
**dadurch gekennzeichnet,**
**daß** der Formhälftenträger (18) an mindestens einer seiner parallel zu seiner Drehachse (19,20) ausgerichteten Seitenflächen mindestens eine Eingangsöffnung eines Angußkanals zum Anschluß jeweils einer geeignet ausgerichteten und verfahrbaren Plastifizier- und Einspritzeinheit (37) aufweist, wobei jeder Angußkanal zur Beaufschlagung mindestens einer von dem Formhälftenträger (18) gehaltenen und im geschlossenen Zustand mit einer der auf einer der Formaufspannplatten (3,6) befestigten Formhälften (30,31) eine vollständige Spritzgießform ausbildenden weiteren Formhälften mit einer vorgegebenen Kunststoffschmelze dient.

## Claims

1. A device for making injection moulded articles from at least two plastics melts, which has, between a fixed platen (3) which is installed non-movably on a machine frame (1) and a platen (6) which is movable on at least four tie bars (4, 5) that move substantially horizontally and are arranged between the fixed platen (3) and a counter-pressure plate which is also installed non-movably on the machine frame (1), a further platen device (8, 9, 18) which is in turn movable relative to the said platen (6), is pivotal about an axis of rotation (19, 20) aligned perpendicular to the longitudinal axis of the tie bars (4, 5), and carries, on at least two side faces aligned spaced from one another and parallel relative to the axis of rotation, further mould halves (28, 29) cooperating with the mould halves (30, 31) of the platens (3, 6), in which each of the platens (3, 6) is provided with at least one opening (38, 39) which allows a respective plasticising and injection unit (36, 37) to be connected to each of one or more feed channels (34, 35) in the mould halves (30, 31) held by the platens (3, 6), in which the further platen device (8, 9, 18) comprises two stable carrier blocks (8, 9) which are arranged spaced one above the other in a substantially vertically aligned plane, are each guided on at least two tie bars (4, 5) arranged in a substantially horizontally aligned plane and are each provided with a bearing (21, 22) for the substantially vertically aligned axis of rotation (19, 20) of a prism-shaped mould half carrier (18), this mould half carrier (18), which serves to receive the further mould halves (28, 29), and at least two drive means (14, 15, 16, 17) by means of which the respective relative spacing between the platens (3, 6) and each carrier block (8, 9) is alterable in the longitudinal direction of the tie bars (4, 5), **characterised in that** bearings (21, 22) and/or the axis of rotation (19, 20) are constructed such that the mounting of the axis of rotation (19, 20) by the bearings (21, 22) may be released without removing the carrier blocks (8, 9) from the tie bars (4, 5) carrying them.

2. A device according to Claim 1, **characterised in that** the mould half carrier (18) is connected on its outer faces facing the carrier blocks (8, 9) to journals (19, 20) which are connected force-fittingly or in one piece therewith and which provide a verification of its axis of rotation (19, 20).

3. A device according to Claim 2, **characterised in that** the length dimension of the journals (19, 20) is such that they project into the bearings (21, 22) arranged in the carrier blocks (8, 9) to a sufficient extent, and **in that** at least one of the bearings (21, 22) in the carrier blocks (8, 9) can be opened in the direction of one of the platens (3, 6) and on release of and/or receiving a journal (19, 20) can be closed again.

4. A device according to Claim 2, **characterised in that** the journals (19, 20) end in front of the inlet openings of the bearings (21, 22) but may be form-fittingly and/or force-fittingly connected there by means of coupling devices of known type to further journals which are held permanently in the bearings (21, 22) and project individually out of the inlet openings of the bearings (21, 22).

5. A device according to one of Claims 1 to 4, **characterised in that** the carrier block directly adjacent to the machine frame (1) - the lower carrier block - is supported by means of rollers and/or sliders (40) on the machine bed (2) forming the delimitation of the machine frame (1) extending below the tie bars (4, 5).

6. A device according to one of Claims 1 to 5, **characterised in that** the mould half carrier (18) has, perpendicular to its axis of rotation (19, 20), a cross-sectional face in the form of a regular polygon with an even number of sides, with each side face arranged parallel to the axis of rotation (19, 20) being usable as an abutment face for at least one further mould half (28, 29).

7. A device according to Claim 6, **characterised in that**, in the condition in which the platens (3, 6) equipped with mould halves (30, 31) and the mould half carrier (18) equipped with further mould halves (28, 29) are moved in towards one another, it is possible to apply supplementary mould halves to the further mould halves held by those further side faces of the mould half carrier (18) not directly opposite the platens (3, 6) such that additional complete injection moulds are constructed, and these supplementary mould halves are carried by further platens which may be moved in the respectively predetermined direction and are each equipped with at least one associated plasticising and injection unit.

8. A device according to one of Claims 1 to 5, **characterised in that** the mould half carrier (18) has, perpendicular to its axis of rotation (19, 20), a cross-sectional face in the form of an irregular polygon with an even number of sides, with only certain pairs of side faces arranged parallel to one another and relative to the axis of rotation being usable as abutment faces for in each case at least one further mould half (28, 29).

9. A device according to Claim 8, **characterised in that** the mould half carrier (18) has, perpendicular to its axis of rotation (19, 20), a cross-sectional face in the form of an elongate rectangle, with only those side faces arranged parallel to the axis of rotation (19, 20) and forming the lengthwise edges of the rectangle being used as abutment faces for in each case at least one further mould half (28, 29).

10. A device according to one of Claims 2 to 9, **characterised in that** at least one of the journals (19, 20) is connected directly or by way of a gear (25) to a drive motor (26) arranged at or on the directly adjacent carrier block (8, 9).

11. A device according to Claim 10, **characterised in that** the drive motor (26) is an electric motor of known type.

12. A device according to Claim 10, **characterised in that** the drive motor (26) is a hydraulic motor of known type.

13. A device according to one of Claims 10 to 12, **characterised in that** each drive motor (26) is controlled by way of an absolute shaft encoder (27).

14. A device according to one of Claims 1 to 13, **characterised in that** the desired end positions of the pivotal movements of the mould half carrier (18) about its substantially vertically aligned axis of rotation (19, 20) are controlled and fixed by means of one or more indexing elements (43).

15. A device according to Claim 14, **characterised in that** there is used as the indexing element (43) a hydraulically operated holding pin (44) which is fixed to a carrier block (8, 9) and cooperates in each case with a complementary bore (45) **in that** outer side of the mould half carrier (18) facing the carrier block (8, 9) holding it.

16. A device according to Claim 14, **characterised in that** there is used as the indexing element (43) a holding pin which is fixed to a carrier block (8, 9) and, by means of spring force, presses a rollable ball onto that outer side of the mould half carrier (18) facing the carrier block (8, 9) holding it, on reaching a desired end position penetrates into a predetermined bore in the outer side and by means of an electromagnet may be withdrawn from this bore.

17. A device according to one of Claims 1 to 16, **characterised in that** the further mould halves (28, 29) are exchangeably secured to the mould half carrier (18).

18. A device according to Claim 17, **characterised in that** the further mould halves (28, 29) are secured to the mould half carrier (18) by means of quick-acting clamps of known type.

19. A device according to one of Claims 1 to 18, **characterised in that** the drive units (14, 15, 16, 17) for altering the respective relative spacing between the platens (3, 6) and each carrier block (8, 9) are hydraulically actuated piston-and-cylinder units which have their one end region force-fittingly connected to the movable platen (6) and their other end region force-fittingly connected to one of the carrier blocks (8, 9) and are movable parallel to the longitudinal direction of the tie bars (4, 5).

20. A device according to one of Claims 1 to 19, **characterised in that** individual or all mould halves (31) have on at least one of their side faces extending between the contact face and the parting line at least one inlet opening (39) to a feed channel (35) in order to connect a respective suitably aligned and movable plasticising and injection unit (37).

21. A device according to one of Claims 1 to 20, **characterised in that** the mould half carrier (18) has on at least one of its side faces aligned parallel to its axis of rotation (19, 20) at least one inlet opening to a feed channel in order to connect a respective suitably aligned and movable plasticising and injection unit (37), with each feed channel serving to supply a predetermined plastics melt to at least one of the further mould halves held by the mould half carrier (18) and, in the closed condition, constructing a complete injection mould together with one of the mould halves (30, 31) secured to one of the platens (3, 6).

## Revendications

1. Dispositif de fabrication d'articles moulés par injection d'au moins deux matières plastiques fondues, qui présente, entre un plateau porte-outillage fixe (3) installé de manière fixe sur un bâti de machine (1) et un plateau porte-outillage mobile (6) sur au moins quatre longerons (4, 5) disposés sensiblement horizontalement, disposés entre le plateau porte-outillage fixe (3) et un plateau de contre-pression installé également de manière fixe sur le bâti de machine (1), un autre dispositif porte-outillage (8, 9, 18) mobile de son côté, par rapport à celui-ci et pivotant autour d'un axe de rotation (19, 20) orienté verticalement par rapport à l'axe longitudinal des longerons (4, 5), qui porte, sur au moins deux faces latérales espacées l'une de l'autre et orientées parallèlement par rapport à l'axe de rotation, d'autres demi-moules (28, 29) coopérant avec les demi-moules (30, 31) des plateaux porte-outillage (3, 6), chacun des plateaux porte-outillage (3, 6) étant pourvu d'au moins une ouverture (38, 39), qui permet le raccordement respectivement d'une unité de plastification et d'injection (36, 37) à chacun du ou des canaux de carotte (34, 35) dans les demi-moules (30, 31) tenus par les plateaux porte-outils (3, 6), l'autre dispositif porte-outillage (8, 9, 18) se composant de deux blocs de support stables (8, 9) disposés espacés l'un au-dessus de l'autre dans un plan orienté en substance verticalement et guidés respectivement sur au moins deux longerons (4, 5) disposés dans un plan orienté sensiblement horizontalement, les deux blocs de support étant pourvus respectivement d'un palier (21, 22) pour l'axe de rotation (19, 20) orienté sensiblement verticalement d'un support de demi-moules en forme de prisme (18), de ce support de demi-moules (18) servant au logement des autres demi-moules (28, 29) et d'au moins deux dispositifs de commande (14, 15, 16, 17), au moyen desquels l'espacement respectif relatif entre les plateaux porte-outillage (3, 6) et chaque bloc de support (8, 9) est modifiable dans le sens longitudinal des longerons (4, 5), **caractérisé en ce que** le palier (21, 22) et / ou l'axe de rotation (19, 20) sont formés de telle sorte que la fixation de l'axe de rotation (19, 20) assurée par les paliers (21, 22) peut être démontée sans enlever les blocs de support (8, 9) des longerons (4, 5) qui les portent.

2. Dispositif selon la revendication 1, **caractérisé en ce que** le support de demi-moules (18) est relié sur ses surfaces extérieures tournées vers les blocs de support (8, 9) par des tourillons (19, 20) reliés avec lui par adhérence ou d'une seule pièce et qui vérifient son axe de rotation (19, 20).

3. Dispositif selon la revendication 2, **caractérisé en ce que** la longueur des tourillons (19, 20) est dimensionnée de telle sorte qu'ils se prolongent dans une mesure suffisante dans les paliers (21, 22) disposés dans les blocs de support (8, 9) et qu'au moins l'un des paliers (21, 22) doit être ouvert dans les blocs de support (8, 9) en direction de l'un des plateaux porte-outillage (3, 6) et doit être refermé après le relâchement et / ou le logement d'un tourillon (19, 20).

4. Dispositif selon la revendication 2, **caractérisé en ce que** les tourillons (19, 20) se terminent devant les ouvertures d'entrée des paliers (21, 22) mais peuvent y être reliés par complémentarité de forme et / ou par adhérence au moyen de dispositifs d'accouplement de type connu grâce à d'autres tourillons maintenus de manière permanente dans les paliers (21, 22) et dépassant pièce par pièce des ouvertures d'entrée des paliers (21, 22).

5. Dispositif selon l'une des revendications 1 à 4, **caractérisé en ce que** le bloc de support - inférieur - directement adjacent au bâti de machine (1) s'appuie au moyen de rouleaux et / ou de patins (40) sur le socle de machine (2) qui constitue la butée de limitation du bâti de la machine (1) qui évolue sous les longerons (4, 5).

6. Dispositif selon l'une des revendications 1 à 5, **caractérisé en ce que** le support de demi-moules (18) présente verticalement par rapport à son axe de rotation (19, 20) une surface de section en forme de polygone régulier à nombre pair, chaque surface latérale disposée parallèlement à l'axe de rotation (19, 20) étant utilisable en tant que surface de butée pour au moins un autre demi-moule (28, 29).

7. Dispositif selon la revendication 6, **caractérisé en ce qu'**en l'état contigu des plateaux porte-outillage (3,6) munis de demi-moules (30, 31) et du support de demi-moules (18) muni d'autres demi-moules (28, 29) contre les autres demi-moules tenus par d'autres surfaces latérales du support de demi-moules (18) qui ne sont pas directement en face des plateaux porte-outillage (3, 6), des demi-moules complémentaires peuvent être disposés afin de constituer des moules par injection complets supplémentaires, qui seront supportés par d'autres plateaux porte-outillage mobiles dans la direction respectivement prescrite et munis respectivement d'au moins une unité de plastification et d'injection associée.

8. Dispositif selon l'une des revendications 1 à 5, **caractérisé en ce que** le support de demi-moules (18) présente verticalement par rapport à son axe de rotation (19, 20) une surface de section en forme de polygone irrégulier à nombre pair, seules certaines paires de surfaces latérales disposées parallèlement réciproquement et par rapport à l'axe de rotation étant utilisables en tant que surfaces de butée pour respectivement au moins un autre demi-moule (28, 29).

9. Dispositif selon la revendication 8, **caractérisé en ce que** le support de demi-moule (18) présente verticalement par rapport à son axe de rotation (19, 20) une surface de section en forme de rectangle allongé, seules les surfaces latérales disposées parallèlement à l'axe de rotation (19, 20) et constituant les bords longitudinaux du rectangle étant utilisées en tant que surfaces de butée pour respectivement au moins un autre demi-moule (28, 29).

10. Dispositif selon l'une des revendications 2 à 9, **caractérisé en ce qu'**au moins l'un des tourillons (19, 20) est relié directement ou par l'intermédiaire d'une transmission (25) avec un moteur de commande (26) disposé contre ou sur le bloc de support directement contigu (8, 9).

11. Dispositif selon la revendication 10, **caractérisé en ce que** le moteur de commande (26) est un moteur électrique de type connu.

12. Dispositif selon la revendication 10, **caractérisé en ce que** le moteur de commande (26) est un moteur hydraulique de type connu.

13. Dispositif selon l'une des revendications 10 à 12, **caractérisé en ce que** chaque moteur de commande (26) est piloté par un codeur angulaire (27).

14. Dispositif selon l'une des revendications 1 à 13, **caractérisé en ce que** les positions extrêmes désirées des mouvements oscillants du support de demi-moules (18) sont contrôlées et fixées autour de son axe de rotation (19, 20) orienté sensiblement verticalement au moyen d'un ou de plusieurs éléments de repérage (43).

15. Dispositif selon la revendication 14, **caractérisé en ce qu'**est utilisée en tant qu'élément d'indexation une cheville d'arrêt (44) actionnée hydrauliquement fixée sur un bloc de support (8, 9), qui agit en association avec un alésage complémentaire (45) dans la face extérieure du support de demi-moules (18) tournée vers le bloc de support (8, 9) qui le retient.

16. Dispositif selon la revendication 14, **caractérisé en ce qu'**on utilise en tant qu'élément d'indexation (43) une cheville d'arrêt fixée sur un bloc de support (8, 9), qui enfonce au moyen d'une tension de ressort une bille pouvant rouler sur la face extérieure du support de demi-moules (18) tournée vers le bloc de support (8, 9) qui le retient, s'enfonce, lorsque est atteinte une position extrême désirée, dans un alésage prédéfini dans la face extérieure et peut être retirée de cet alésage au moyen d'un électroaimant.

17. Dispositif selon l'une des revendications 1 à 16, **caractérisé en ce que** les autres demi-moules (28, 29) sont fixés sur le support de demi-moules (18) de manière échangeable.

18. Dispositif selon la revendication 17, **caractérisé en ce que** la fixation des autres demi-moules (28, 29) sur le support de demi-moules (18) a lieu au moyen de fermetures rapides de type connu.

19. Dispositif selon l'une des revendications 1 à 18, **caractérisé en ce que** les unités de commande (14, 15, 16, 17) sont des unités de vérin actionnées hydrauliquement destinées à modifier l'écart respectif relatif entre les plateaux porte-outillage (3, 6) et chaque bloc de support (8, 9), qui sont reliées par l'une de leurs zones d'extrémité par adhérence avec le plateau porte-outillage mobile (6) et avec leur autre zone d'extrémité par adhérence avec l'un des blocs de support (8, 9) et sont mobiles parallèlement à la direction longitudinale des longerons (4, 5).

20. Dispositif selon l'une des revendications 1 à 19, **caractérisé en ce que** certains ou tous les demi-moules (31) présentent sur au moins l'une de leurs surfaces latérales qui s'étendent entre la surface d'appui et le plan de joint au moins une ouverture d'entrée (39) d'un canal de carotte (35) destinée à raccorder respectivement une unité de plastification et d'injection (37) orientée de manière appropriée et mobile.

21. Dispositif selon l'une des revendications 1 à 20, **caractérisé en ce que** le support de demi-moules (18) présente sur au moins l'une de ses surfaces latérales orientées parallèlement à son axe de rotation (19, 20) au moins une ouverture d'entrée d'un canal de carotte destinée à raccorder respectivement une unité de plastification et d'injection (37) orientée de manière appropriée et mobile, chaque canal de carotte servant à alimenter avec une masse de matière plastique fondue prédéterminée au moins un autre demi-moule constituant un moule d'injection complet tenu par le support de demi-moules (18) et à l'état fermé grâce à l'un des demi-moules (30, 31) fixés sur l'un des plateaux porte-outillage (3, 6).
